# EUROPEAN PATENT APPLICATION

(11) **EP 4 783 326 A1**
(43) Date of publication of application: **29.07.2026**
(21) Application number: 24866800.6
(22) Date of filing: 22.03.2024
(51) Int. Cl.: H01M 50/242, H01M 50/258, H01M 50/244, H01M 50/249

(54) **BATTERY PACK AND VEHICLE**

(30) Priority: 22.09.2023 CN 202311233150
(71) Applicant: BYD Company Limited, Shenzhen, Guangdong 518118 (CN)
(72) Inventor: YAO, Yuchao, Shenzhen, Guangdong 518118 (CN); FENG, Lichen, Shenzhen, Guangdong 518118 (CN); ZENG, Erping, Shenzhen, Guangdong 518118 (CN); YIN, Jiwei, Shenzhen, Guangdong 518118 (CN); HE, Junlin, Shenzhen, Guangdong 518118 (CN)
(74) Representative: Taor, Simon Edward William
(86) International application number: PCT/CN2024/083245
(87) International publication number: WO 2025/060373

(57) **Abstract**

A vehicle is provided. The vehicle includes a battery pack. The battery pack includes a tray and a plurality of layers of battery modules. The plurality of layers of battery modules are all disposed on the tray. The plurality of layers of battery modules include a first-layer battery module and a second-layer battery module. The second-layer battery module is disposed on a side that is of the first-layer battery module and that is away from the tray. The second-layer battery module includes a first battery module and a second battery module. A quantity of battery cells of the first battery module is less than a quantity of battery cells of the second battery module.

## Description

### CROSS-REFERENCE TO RELATED APPLICATIONS

This application claims priority to Chinese Patent Application No. 202311233150.2, filed with the China National Intellectual Property Administration on September 22, 2023 and entitled "BATTERY PACK AND VEHICLE", which is incorporated herein by reference in its entirety.

### TECHNICAL FIELD

This application relates to the field of battery technologies, and in particular to a battery pack and a vehicle.

### BACKGROUND

With rapid development of vehicles, people's requirements for vehicles are increasingly high, among which the requirement for a vehicle range is more obvious. When a battery pack is used for supplying power to a vehicle, the people's requirement for the vehicle range can be gradually met by improving the battery pack.

In a related technology, the battery pack is usually arranged in a single-layer battery module manner, but a capacity of a single-layer battery pack is limited and cannot meet power requirements of the vehicle. However, a double-layer battery module structure has drawbacks such as low space utilization within a battery pack, poor structural strength of the battery pack, and vulnerability of the battery pack to damage during vehicle vibration.

### SUMMARY

This application is intended to solve at least one of the technical problems existing in the related technology. Therefore, an objective of this application is to provide a battery pack in which a first battery module and a second battery module as disposed, to improve space utilization of the battery pack and a capacity of the battery pack, and also improves structural strength of the battery pack and facilitates assembly of the battery pack.

Another objective of this application is to provide a vehicle employing the foregoing battery pack.

A battery pack according to an embodiment of a first aspect of this application includes: a tray; and a plurality of layers of battery modules, where the plurality of layers of battery modules are all disposed on the tray, the plurality of layers of battery modules include a first-layer battery module and a second-layer battery module, the second-layer battery module is disposed on a side that is of the first-layer battery module and that is away from the tray, the second-layer battery module includes a first battery module and a second battery module, and a quantity of battery cells of the first battery module is less than a quantity of battery cells of the second battery module.

According to the battery pack of this application, configuring the second-layer battery module as a first battery module and a second battery module containing different quantities of battery cells reduces the quantity of modules in the second-layer battery module, thereby improving space utilization of the battery pack. Moreover, a capacity of the battery pack is improved, and therefore a driving range of the vehicle is enhanced. In addition, during assembly of the battery pack, a difficulty of hoisting the second-layer battery module is reduced, and therefore assembly efficiency of the battery pack is improved. In addition, structural strength of the battery pack is improved, and therefore, long-term use of the battery pack is facilitated.

According to some embodiments of this application, the first battery module is arranged adjacent to an edge of the tray, and an orthographic projection of the first battery module on the tray and an orthographic projection of the center of the tray on the tray do not overlap.

According to some embodiments of this application, the tray includes: a tray body, where the first-layer battery module is disposed on the tray body; and a plurality of tray beams, where the plurality of tray beams are all disposed on the tray body, the plurality of tray beams includes a first tray beam, a second tray beam, and a third tray beam, the first tray beam and the second tray beam are respectively disposed at two ends of the tray body in a first direction, the third tray beam is located between the first tray beam and the second tray beam, and the third tray beam is opposite to the second battery module.

According to some embodiments of this application, the third tray beam is offset from the center of the tray in the first direction.

According to some embodiments of this application, the first-layer battery module includes a third battery module, where the third battery module is disposed between the first tray beam and the third tray beam; and a fourth battery module, where the fourth battery module is disposed between the third tray beam and the second tray beam.

According to some embodiments of this application, the battery pack further includes: a heat exchange plate, where the heat exchange plate is disposed between the first-layer battery module and the second-layer battery module, and the heat exchange plate is connected to the first tray beam, the second tray beam, and the third tray beam.

According to some embodiments of this application, the battery pack further includes: a heat exchange plate, where the heat exchange plate is disposed between the first-layer battery module and the second-layer battery module, and the heat exchange plate is connected to the first tray beam, the second tray beam, and the third tray beam.

According to some embodiments of this application, the tray body is provided with a first side beam and a second side beam, where the first side beam and the second side beam both extend in the first direction, the first side beam and the second side beam are respectively located on two sides of the first tray beam, the second tray beam, and the third tray beam in a second direction, and the second direction is perpendicular to the first direction. The battery pack further includes: a first end plate, where the first end plate is connected to the first side beam; and a second end plate, where the second end plate is connected to the second side beam, and the second-layer battery module is connected to the first end plate and the second end plate.

According to some embodiments of this application, the first side beam is provided with at least one first connecting protrusion, and the first end plate is connected to the first connecting protrusion; and/or, the second side beam is provided with at least one second connecting protrusion, and the second end plate is connected to the second connecting protrusion.

According to some embodiments of this application, there are a plurality of first connecting protrusion, the plurality of first connecting protrusions are spaced apart in the first direction, and the first end plate is connected to the plurality of first connecting protrusions; and/or there are a plurality of second connecting protrusions, the plurality of second connecting protrusions are spaced apart in the first direction, and the second end plate is connected to the plurality of second connecting protrusions.

A vehicle according to an embodiment of a second aspect of this application includes the battery pack according to the foregoing embodiment of the first aspect of this application.

Additional aspects and advantages of this application are set forth in part in the following description, and in part become apparent from the following description, or may be learned through the practice of this application.

### BRIEF DESCRIPTION OF DRAWINGS

The foregoing and/or additional aspects and advantages of this application will become apparent and readily understood from the description of embodiments taken in conjunction with the following accompanying drawings, in which:
FIG. 1 is an exploded view of a battery pack according to an embodiment of this application;
FIG. 2 is a diagram of a part of a battery pack according to an embodiment of this application;
FIG. 3 is an enlarged view of a portion A in FIG. 2;
FIG. 4 is a diagram of a first-layer battery module of a battery pack according to an embodiment of this application;
FIG. 5 is a diagram of a tray of a battery pack according to an embodiment of this application;
FIG. 6 is an enlarged view of a portion B in FIG. 5; and
FIG. 7 is a block diagram of a vehicle according to an embodiment of this application.

### Reference numerals:

vehicle 1000;
battery pack 100;
tray 1; tray body 11; first side beam 111; first connecting protrusions 1111;
second side beam 112; second connecting protrusion 1121;
tray beams 12; first tray beam 121; second tray beam 122; third tray beam 123;
insertion hole 124; positioning rod 125;
battery module 2; first-layer battery module 21; third battery module 211; fourth battery module 212;
second-layer battery module 22; first battery module 221; battery cell 2211; second battery module 222;
limiting plate 223; fastening plate 224; second fastener 225;
heat exchange plate 3; first fastener 31;
first end plate 4; third fastener 41; second end plate 5; cover plate 6.

### DESCRIPTION OF EMBODIMENTS

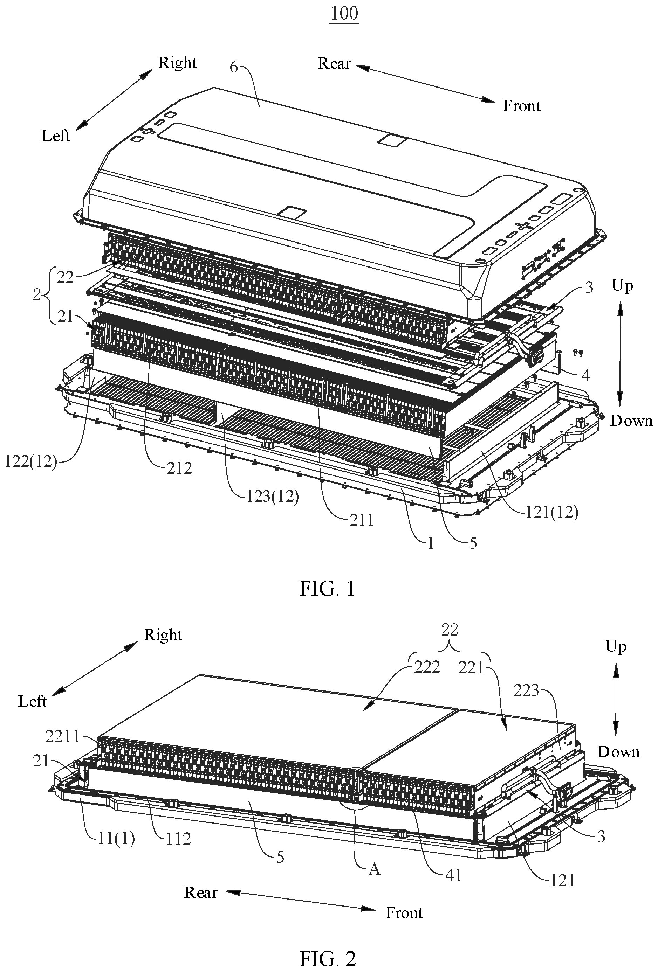

Embodiments of this application are described in detail below. Embodiments described with reference to the accompanying drawings are exemplary. A battery pack 100 according to an embodiment of this application is described below with reference to FIG. 1 to FIG. 6.

As shown in FIG. 1 and FIG. 2, a battery pack 100 according to an embodiment of a first aspect of this application includes a tray 1 and a plurality of layers of battery modules 2.

Specifically, the plurality of layers of battery modules 2 are all disposed on the tray 1. The plurality of layers of battery modules 2 include a first-layer battery module 21 and a second-layer battery module 22. The second-layer battery module 22 is disposed on a side that is of the first-layer battery module 21 and that is away from the tray 1. For example, as shown in FIG. 1, the first-layer battery module 21 is located on the tray 1, and the second-layer battery module 22 is located above the first-layer battery module 21. The tray 1, the first-layer battery module 21, and the second-layer battery module 22 are stacked in an up-down direction (for example, an up-down direction in FIG. 1). In this disposing manner, a quantity of battery modules 2 is increased, and therefore, a capacity of the battery pack 100 can be improved, and a driving range of a vehicle is enhanced when the battery pack 100 is used in the vehicle. In addition, the tray 1 provides support for the battery modules 2, which facilitates long-term stable use of the battery modules 2.

Refer to FIG. 1 and FIG. 2. The second-layer battery module 22 includes a first battery module 221 and a second battery module 222. A quantity of battery cells 2211 of the first battery module 221 is less than a quantity of battery cells 2211 of the second battery module 222. For example, as shown in FIG. 1 and FIG. 2, the first battery module 221 and the second battery module 222 are arranged in a front-rear direction (for example, a front-rear direction in FIG. 1). The first battery module 221 is located at a front end of the battery pack 100, and the second battery module 222 is located at a rear end of the battery pack 100. An orthographic projection of the second-layer battery module 22 and the orthographic projection of the first-layer battery module 21 overlap. In this disposing manner, compared to a conventional technology in which a plurality of small modules are provided, the second-layer battery module 22 of this application includes two modules, so that the quantity of modules in the second-layer battery module 22 is reduced, and therefore a gap between adjacent modules is reduced, a capacity of the battery pack 100 is improved, and space utilization of the battery pack 100 is also improved. In addition, the second-layer battery module 22 is composed of the first battery module 221 and the second battery module 222, and the first battery module 221 and the second battery module 222 can be conveniently hoisted during assembly of the battery pack 100, so that mounting difficulty of the second-layer battery module 22 is reduced and assembly efficiency of the battery pack 100 is improved. Moreover, compared to a conventional technology in which an entire module is provided, the second-layer battery module 22 composed of two modules helps improve structural strength of the battery pack 100, thereby facilitating long-term use of the battery pack 100. In addition, the quantity of battery cells 2211 of the first battery module 221 is convenient to control within a small range, which facilitates adjustment in the quantity of the battery cells 2211 of the first battery module 221 of the battery pack 100 based on actual use conditions, thereby improving use performance of the battery pack 100.

According to the battery pack 100 of this application, configuring the second-layer battery module 22 as a first battery module 221 and a second battery module 222 containing different quantities of battery cells 2211 reduces the quantity of modules in the second-layer battery module 22, thereby improving space utilization of the battery pack 100. Moreover, a capacity of the battery pack 100 is improved, and therefore a driving range of the vehicle is enhanced. In addition, during assembly of the battery pack 100, a difficulty of hoisting the second-layer battery module 22 is reduced, and therefore assembly efficiency of the battery pack 100 is improved. In addition, structural strength of the battery pack 100 is improved, and therefore long-term use of the battery pack 100 is facilitated.

According to some embodiments of this application, with reference to FIG. 2, the first battery module 221 is arranged adjacent to an edge of the tray 1, and an orthographic projection of the first battery module 221 on the tray 1 and an orthographic projection of the center of the tray 1 on the tray 1 do not overlap. For example, as shown in FIG. 2, the first battery module 221 is adjacent to an edge of a front end of the tray 1, and the center of the first battery module 221 is offset from the center of the tray 1. Therefore, when the battery pack 100 is subjected to vibration, an edge of the battery pack 100 has a small amplitude, which reduces an amplitude of the first battery module 221, and can effectively prevent the first battery module 221 from being damaged. Furthermore, vibration of the first battery module 221 is less likely to affect the first-layer battery module 21, which reduces impact on the battery cells 2211 of the first-layer battery module 21. It should be noted that a distance between the first battery module 221 and the center of the second-layer battery module 22, as well as the quantity of the battery cells 2211 of the first battery module 221, can be set based on specific usage to better meet practical applications.

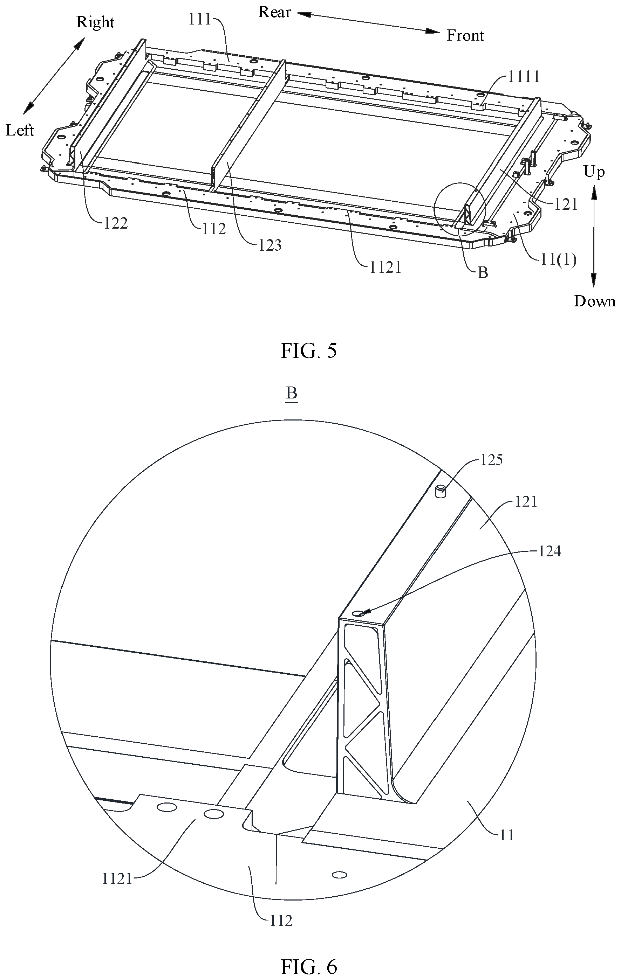

According to some embodiments of this application, with reference to FIG. 1 and FIG. 5, the tray 1 includes a tray body 11 and a plurality of tray beams 12.

Specifically, the first-layer battery module 21 is disposed on the tray body 11, and the plurality of tray beams 12 are all disposed on the tray body 11. In description of this application, "plurality of " means two or more. The plurality of tray beams 12 include a first tray beam 121, a second tray beam 122, and a third tray beam 123. The first tray beam 121 and the second tray beam 122 are respectively located at two ends of the tray body 11 in a first direction (for example, a front-rear direction in FIG. 5). For example, as shown in FIG. 1 and FIG. 5, the plurality of tray beams 12 are all fastened to the tray body 11. The plurality of tray beams 12 are separately connected to an upper surface of the tray body 11, and the plurality of tray beams 12 extend in a left-right direction. The first tray beam 121 is located at a front end of the tray body 11. A rear side surface of the first tray beam 121 abuts against a front side surface of the first-layer battery module 21. The second tray beam 122 is located at a rear end of the tray body 11. A front side surface of the second tray beam 122 abuts against a rear side surface of the first-layer battery module 21. In this disposing manner, the first tray beam 121 and the second tray beam 122 limit the first-layer battery module 21, which prevents the first-layer battery module 21 from swaying relative to the tray body 11 in the front-rear direction, further improves assembly stability of the first-layer battery module 21 and the tray 1 and also improves overall stability of the first-layer battery module 21, and thereby facilitates long-term use of the first-layer battery module 21. In addition, the first tray beam 121, the second tray beam 122, and the third tray beam 123 separately support the second-layer battery module 22, which improves overall structural strength of the battery pack 100 and protection effect of the tray 1 on the first-layer battery module 21, and further improves use performance of the battery pack 100 and also prolongs service life of the battery pack 100.

Refer to FIG. 1 and FIG. 5. The third tray beam 123 is located between the first tray beam 121 and the second tray beam 122, and the third tray beam 123 is opposite to the second battery module 222. For example, as shown in FIG. 1 and FIG. 5, the second tray beam 122 extends in the left-right direction, and the third tray beam 123 and the second battery module 222 are opposite to each other in the up-down direction. Therefore, when the battery pack 100 is subjected to vibration, vibration energy of the second battery module 222 can be transferred to the tray body 11 through the third tray beam 123, which prevents the vibration energy of the second battery module 222 from being transferred to the first-layer battery module 21. This avoids a risk of cracking and leaking of the battery cells 2211 of the first-layer battery module 21 due to excessive stress, and also avoids a vibration failure of the second battery module 222, thereby prolonging a service life of the battery pack 100 and also improving use performance of the battery pack 100. In addition, only one third tray beam 123 between the first tray beam 121 and the second tray beam 122 are disposed, so that a possibility of collision between the battery cells 2211 of the first-layer battery module 21 and the third tray beam 123 can be reduced during mounting of the first-layer battery module 21, which prevents the first-layer battery module 21 from being damaged. Moreover, space occupied by the third tray beam 123 on the tray body 11 is reduced, and therefore space utilization of a lower layer of the battery pack 100 is improved. It should be noted that a size of the third tray beam 123 can be specifically set based on specific usage to better meet practical applications.

Further, refer to FIG. 1 and FIG. 5. The third tray beam 123 is offset from the center of the tray 1 in the first direction. For example, as shown in FIG. 1 and FIG. 5, the third tray beam 123 is located between the center of the tray 1 and the second tray beam 122. Therefore, the third tray beam 123 is arranged in an offset manner, so that it is convenient for the third tray beam 123 to be opposite to a middle portion of the second battery module 222. Therefore, when the battery pack 100 is subjected to vibration, vibration energy of the second battery module 222 can be better transferred to the tray 1 through the third tray beam 123. This further prevents the first-layer battery module 21 from being damaged, and can further avoid the vibration failure of the second battery module 222, thereby further prolonging the service life of the battery pack 100 and further improving the use performance of the battery pack 100.

According to some embodiments of this application, with reference to FIG. 1, the first-layer battery module 21 includes a third battery module 211 and a fourth battery module 212. The third battery module 211 is disposed between the first tray beam 121 and the third tray beam 123, and the fourth battery module 212 is disposed between the third tray beam 123 and the second tray beam 122. For example, as shown in FIG. 1, a rear side surface of the third battery module 211 abuts against a front side surface of the third tray beam 123, and a front side surface of the fourth battery module 212 abuts against the rear side surface of the third tray beam 123. In this disposing manner, the structure is simple, facilitating mounting of the third battery module 211 between the first tray beam 121 and the third tray beam 123, as well as facilitating mounting of the fourth battery module 212 between the second tray beam 122 and the third tray beam 123. This facilitates mounting of the first-layer battery module 21 on the tray 1, and further improves assembly efficiency of the battery pack 100. In addition, integrity of the first-layer battery module 21 is improved. An overall layout of the first battery module 221, the second battery module 222, the third battery module 211, and the fourth battery module 212 is arranged in a brick-laying manner, making a structure of the entire battery pack 100 tend to be a whole, which helps improve a mode of the battery pack 100 and improve safety of the battery pack 100.

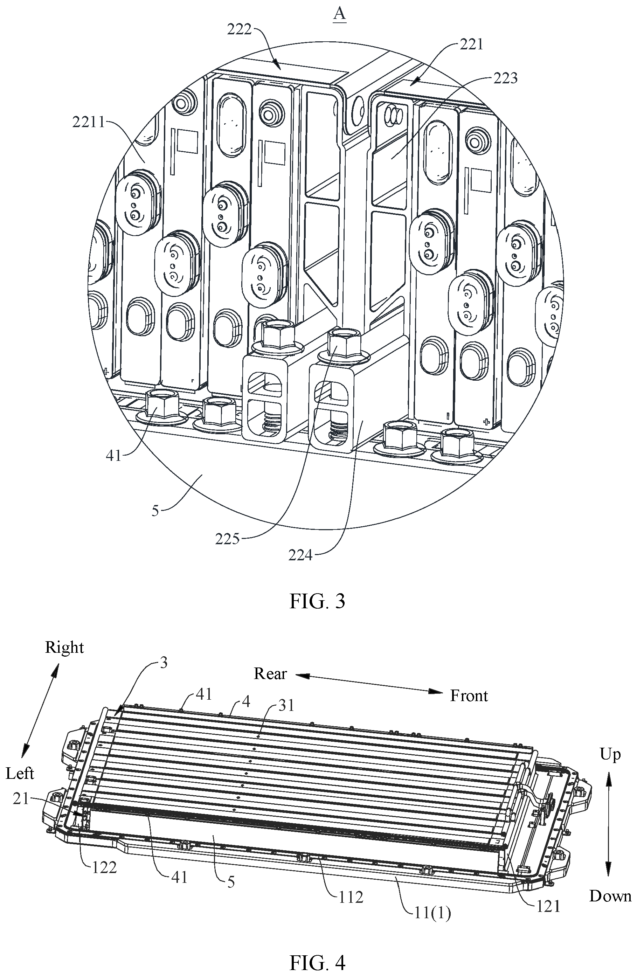

According to some embodiments of this application, with reference to FIG. 1 and FIG. 4, the battery pack 100 further includes a heat exchange plate 3. The heat exchange plate 3 is disposed between the first-layer battery module 21 and the second-layer battery module 22. The heat exchange plate 3 is connected to the first tray beam 121, the second tray beam 122, and the third tray beam 123. For example, as shown in FIG. 1 and FIG. 4, the first-layer battery module 21 is located below the heat exchange plate 3, and the second-layer battery module 22 is located above the heat exchange plate 3. The heat exchange plate 3 is separately connected to the first tray beam 121, the second tray beam 122, and the third tray beam 123. In this disposing manner, after the battery pack 100 operates for a period of time, the first-layer battery module 21 and the second-layer battery module 22 will heat up and generate heat. The heat exchange plate 3 can separately exchange heat with the first-layer battery module 21 and the second-layer battery module 22, to take away the heat of the first-layer battery module 21 and the second-layer battery module 22. Therefore, the heat exchange plate 3 can reduce temperatures of the first-layer battery module 21 and the second-layer battery module 22 (certainly, when the temperatures of the first-layer battery module 21 and the second-layer battery module 22 are low, the heat exchange plate 3 can also transfer heat to the first-layer battery module 21 and the second-layer battery module 22), which facilitates normal use of the battery pack 100. In addition, the heat exchange plate 3 is connected to the first tray beam 121, the second tray beam 122, and the third tray beam 123, so that connection strength between the heat exchange plate 3 and the tray beam 12 is improved. This improves connection stability between the heat exchange plate 3 and the tray 1, and facilitates long-term stable use of the heat exchange plate 3.

Optionally, with reference to FIG. 4, the heat exchange plate 3 is provided with a plurality of first fasteners 31. The plurality of first fasteners 31 fasten the heat exchange plate 3 to the first tray beam 121, the second tray beam 122, and the third tray beam 123. The first fastener 31 may be a rivet. Each of upper side surfaces of the first tray beam 121, the second tray beam 122 and the third tray beam 123 is provided with a plurality of insertion holes 124. The first fastener 31 is in a mating connection with the insertion hole 124. The plurality of first fasteners 31 and the plurality of insertion holes 124 are matched one-to-one, but are not limited thereto. Therefore, stability of connections between the heat exchange plate 3 and the first tray beam 121, the second tray beam 122, and the third tray beam 123 is improved, and therefore stability of the heat exchange plate 3 in use is improved, and the heat exchange plate 3 is prevented from moving relative to the first-layer battery module 21 and the second-layer battery module 22.

Optionally, with reference to FIG. 5 and FIG. 6, at least two positioning rods 125 are disposed on at least one of the first tray beam 121 and the second tray beam 122. At least two positioning holes (not shown in the figures) are formed in a side that is of the heat exchange plate 3 and that faces the first-layer battery module 21. The positioning rod 125 matches the positioning hole in the heat exchange plate 3. The positioning rods 125 are disposed in following ways: First, at least two positioning rods 125 are disposed on an upper surface of the first tray beam 121. Second, at least two positioning rods 125 are disposed on an upper surface of the second tray beam 122. Third, at least one positioning rod 125 is disposed on each of the upper surfaces of both the first tray beam 121 and the second tray beam 122. In this disposing manner, the positioning rod 125 can limit the heat exchange plate 3, and therefore, the heat exchange plate 3 is prevented from rotating when the heat exchange plate 3 is fastened to the first tray beam 121, the second tray beam 122, and the third tray beam 123. This facilitates rapid assembly of the heat exchange plate 3 with high assembly accuracy, thereby improving assembly efficiency of the battery pack 100.

According to some embodiments of this application, with reference to FIG. 5, the tray body 11 is provided with a first side beam 111 and a second side beam 112. The first side beam 111 and the second side beam 112 both extend in the first direction (for example, the front-rear direction in FIG. 5). The first side beam 111 and the second side beam 112 are respectively located on two sides of the first tray beam 121, the second tray beam 122, and the third tray beam 123 in the second direction (for example, the left-right direction in FIG. 5). The second direction is perpendicular to the first direction. For example, as shown in FIG. 5, the first side beam 111 is located on a right side of the tray body 11. The second side beam 112 is located on a left side of the tray body 11. A left side surface of the first side beam 111 is separately connected to a right side surface of the first tray beam 121, a right side surface of the second tray beam 122, and a right side surface of the third tray beam 123. A right side surface of the second side beam 112 is separately connected to a left side surface of the first tray beam 121, a left side surface of the second tray beam 122, and a left side surface of the third tray beam 123. The first-layer battery module 21 is located between the first side beam 111 and the second side beam 112. In this disposing manner, connection strength between the tray body 11 and the first tray beam 121, the second tray beam 122, and the third tray beam 123 is enhanced, and therefore, structural stability of the tray 1 is improved, and structural stability of the battery pack 100 is improved.

With reference to FIG. 1 and FIG. 2, the battery pack 100 further includes a first end plate 4 and a second end plate 5.

Specifically, a first end plate 4 is connected to the first side beam 111. The second end plate 5 is connected to the second side beam 112. The second-layer battery module 22 is connected to the first end plate 4 and the second end plate 5. For example, as shown in FIG. 1 and FIG. 2, the first end plate 4 is located on an upper side of the first side beam 111, and the second end plate 5 is located on an upper side of the second side beam 112. The first end plate 4 and the second end plate 5 are both located below the second-layer battery module 22. A left side surface of the first end plate 4 abuts against a right side surface of the first-layer battery module 21. A right side surface of the second end plate 5 abuts against a left side surface of the first-layer battery module 21. In this disposing manner, connection strength between the tray body 11 and both the first end plate 4 and the second end plate 5 is enhanced. In addition, the first-layer battery module 21 is located within a space jointly defined by the first end plate 4, the second end plate 5, the first tray beam 121, and the second tray beam 122. The first end plate 4 and the second end plate 5 protect and limit the first-layer battery module 21, which prevents the first-layer battery module 21 from swaying transversely, and further improves stability of the first-layer battery module 21 in use. In addition, the first end plate 4 and the second end plate 5 support the second-layer battery module 22, which improves connection stability of the second-layer battery module 22. In addition, connection strength between the second-layer battery module 22 and the tray body 11 is enhanced by connections of the second-layer battery module 22 to the first end plate 4 and the second end plate 5, which improves structural stability of the second-layer battery module 22 and further improves stability of the battery pack 100 in use.

According to some embodiments of this application, with reference to FIG. 5, the first side beam 111 is provided with at least one first connecting protrusion 1111, and the first end plate 4 is connected to the first connecting protrusion 1111. For example, as shown in FIG. 5, the first connecting protrusion 1111 protrudes from a side that is of the first side beam 111 and that faces the second side beam 112 to the second side beam 112. The first end plate 4 is located above the first connecting protrusion 1111, and a lower surface of the first end plate 4 is connected to the first connecting protrusion 1111. In this disposing manner, the first end plate 4 is connected to the first side beam 111 via the first connecting protrusion 1111, which facilitates fastening of the first end plate 4.

According to some other embodiments of this application, with reference to FIG. 5, the second side beam 112 is provided with at least one second connecting protrusion 1121, and the second end plate 5 is connected to the second connecting protrusion 1121. For example, as shown in FIG. 5, the second connecting protrusion 1121 protrudes from a side that is of the second side beam 112 and that faces the first side beam 111 to the first side beam 111. The second end plate 5 is located above the second connecting protrusion 1121, and a lower surface of the second end plate 5 is connected to the second connecting protrusion 1121. In this disposing manner, the second end plate 5 is connected to the second side beam 112 via the second connecting protrusion 1121, which facilitates fastening of the second end plate 5.

According to some further embodiments of this application, the first side beam 111 is provided with at least one first connecting protrusion 1111, and the first end plate 4 is connected to the first connecting protrusion 1111. In addition, the second side beam 112 is provided with at least one second connecting protrusion 1121, and the second end plate 5 is connected to the second connecting protrusion 1121. Therefore, the first end plate 4 is connected to the first side beam 111 via the first connecting protrusion 1111, which facilitates fastening of the first end plate 4. Furthermore, the second end plate 5 is connected to the second side beam 112 via the second connecting protrusion 1121, which facilitates fastening of the second end plate 5. In addition, the first connecting protrusion 1111 and the second connecting protrusion 1121 are simple in structure, which simplifies structures of the first side beam 111 and the second side beam 112.

According to some embodiments of this application, with reference to FIG. 5, there are a plurality of first connecting protrusion 1111, the plurality of first connecting protrusions 1111 are spaced apart in the first direction, and the first end plate 4 is connected to the plurality of first connecting protrusions 1111; and/or there are a plurality of second connecting protrusions 1121, the plurality of second connecting protrusions 1121 are spaced apart in the first direction, and the second end plate 5 is connected to the plurality of second connecting protrusions 1121.

For example, as shown in FIG. 5, the first connecting protrusion 1111 and the second connecting protrusion 1121 are disposed in following ways: First, there are a plurality of first connecting protrusions 1111, the plurality of first connecting protrusions 1111 are spaced apart in the first direction, and the first end plate 4 is connected to the plurality of first connecting protrusions 1111. Second, there are a plurality of second connecting protrusions 1121, the plurality of second connecting protrusions 1121 are spaced apart in the first direction, and the second end plate 5 is connected to the plurality of second connecting protrusions 1121. Third, there are a plurality of first connecting protrusions 1111 and a plurality of second connecting protrusions 1121, the plurality of first connecting protrusions 1111 and the plurality of second connecting protrusions 1121 are spaced apart in the first direction, the first end plate 4 is connected to the plurality of first connecting protrusions 1111, and the second end plate 5 is connected to the plurality of second connecting protrusions 1121. In this disposing manner, the plurality of first connecting protrusions 1111 are provided, so that connection strength between the first end plate 4 and the first side beam 111 is further improved, and therefore connection stability of the first end plate 4 is improved. The plurality of second connecting protrusions 1121 are provided, so that connection strength between the second end plate 5 and the second side beam 112 is further improved, which improves connection stability of the second end plate 5, further improves connection stability between the first end plate 4, the second end plate 5, and the tray 1, and facilitates long-term use of the first end plate 4 and the second end plate 5.

Optionally, with reference to FIG. 2 and FIG. 3, limiting plates 223 are disposed on both side of the first battery module 221 in the first direction (namely the front-rear direction) and both sides of the second battery module 222 in the first direction (namely the front-rear direction). The limiting plates 223 extend in the left-right direction (namely the second direction). Fastening plates 224 are connected to both ends of each limiting plate 223 in the second direction. A height of the fastening plate 224 is less than that of the limiting plate 223. The fastening plate 224 is provided with a second fastener 225. The second fastener 225 located on a left side of the limiting plate 223 can pass through the fastening plate 224 and then be connected to an upper side of the second end plate 5. The second fastener 225 located on a right side of the limiting plate 223 can pass through the corresponding fastening plate 224 and then be connected to an upper side of the first end plate 4. For example, the second fastener 225 may be configured as a bolt, but is not limited thereto. In this disposing manner, left and right sides of the first battery module 221 and the second battery module 222 are respectively fastened to the second end plate 5 and the first end plate 4, which facilitates fixed connections of the second-layer battery module 22 to the first end plate 4 and the second end plate 5, and also improves connection stability of the second-layer battery module 22 and stability of the battery pack 100 in use. In addition, the limiting plate 223 limits the second-layer battery module 22, thereby reducing movement of the second-layer battery module 22 in the front-rear direction and further improving stability of the second-layer battery module 22 in long-term use.

According to some optional embodiments of this application, with reference to FIG. 2 and FIG. 3, a plurality of third fasteners 41 are disposed on each of the first end plate 4 and the second end plate 5. The plurality of third fasteners 41 on the first end plate 4 separately pass through the first end plate 4 and are connected to an upper end of the first connecting protrusion 1111. The plurality of third fasteners 41 on the second end plate 5 can pass through the second end plate 5 and are connected to an upper end of the second connecting protrusion 1121. For example, the third fastener 41 may be configured as a bolt, but is not limited thereto. In this disposing manner, connection strength between the first end plate 4 and the tray 1, as well as connection strength between the second end plate 5 and the tray 1 are improved, and assembly of the first end plate 4 and the second end plate 5 with the tray 1 is also facilitated, which simplifies assembly and disassembly operations and improves assembly efficiency of the battery pack 100.

Optionally, with reference to FIG. 1, the battery pack 100 further includes a cover plate 6. The cover plate 6 is located on an upper side of the tray 1. An edge of the cover plate 6 is detachably connected to an edge of the tray 1. The cover plate 6 and the tray 1 together define a space for placing the first-layer battery module 21 and the second-layer battery module 22. In this disposing manner, through combined effect of the cover plate 6 and the tray 1, protection of internal components of the battery pack 100 is strengthened, and therefore internal damage to the battery pack 100 is avoided and a service life of the battery pack 100 is prolonged.

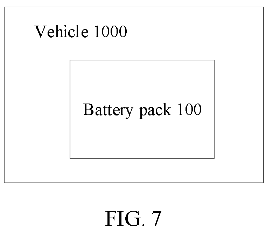

A vehicle 1000 according to an embodiment of a second aspect of this application includes the battery pack 100 according to the foregoing embodiment of the first aspect of this application, as shown in FIG. 7.

According to the vehicle 1000 of this application, the foregoing battery pack 100 is used, so that a driving range of the vehicle 1000 is improved, and use performance of vehicle 1000 is also improved.

Other configurations and operations of the battery pack 100 and vehicle 1000 according to the embodiments of this application are known to persons skilled in the art and will not be described in detail here.

In the descriptions of this application, it should be understood that orientations or positional relationships indicated by the terms "center", "upper", "lower", "front", "rear", "left", "right", and the like are orientations or positional relationships in the drawings, and are only for the purpose of facilitating and simplifying the descriptions of the embodiments of this application instead of indicating or implying that apparatuses or elements indicated must have particular orientations, and be constructed and operated in the particular orientations, so that these terms are not construed as limiting this application.

In the description of this specification, descriptions referring to the terms "one embodiment", "some embodiments", "exemplary embodiments", "examples", "specific examples" or "some examples" mean that specific features, structures, materials or characteristics described in connection with this embodiment or example are included in at least one embodiment or example of this application. In this specification, the schematic representations of the foregoing terms are not necessarily aimed at the same embodiment or example.

Although the embodiments of this application have been shown and described, persons of ordinary skill in the art can understand that many changes, modifications, substitutions and variations can be made to these embodiments without departing from the principles and purposes of this application, and the scope of this application is defined by the claims and their equivalents.

## Claims

1. A battery pack (100), comprising:
a tray (1); and
a plurality of layers of battery modules (2), wherein the plurality of layers of battery modules (2) are all disposed on the tray (1), the plurality of layers of battery modules (2) comprise a first-layer battery module (21) and a second-layer battery module (22), the second-layer battery module (22) is disposed on a side that is of the first-layer battery module (21) and that is away from the tray (1), the second-layer battery module (22) comprises a first battery module (221) and a second battery module (222), a quantity of battery cells (2211) of the first battery module (221) is less than a quantity of battery cells (2211) of the second battery module (222).

2. The battery pack (100) according to claim 1, wherein the first battery module (221) is arranged adjacent to an edge of the tray (1), and an orthographic projection of the first battery module (221) on the tray (1) and an orthographic projection of the center of the tray (1) on the tray (1) do not overlap.

3. The battery pack (100) according to claim 1 or 2, wherein the tray (1) comprises:
a tray body (11), wherein the first-layer battery module (21) is disposed on the tray body (11); and
a plurality of tray beams (12), wherein the plurality of tray beams (12) are all disposed on the tray body (11), the plurality of tray beams (12) comprise a first tray beam (121), a second tray beam (122), and a third tray beam (123), the first tray beam (121) and the second tray beam (122) are respectively disposed at two ends of the tray body (11) in a first direction, the third tray beam (123) is located between the first tray beam (121) and the second tray beam (122), and the third tray beam (123) is opposite to the second battery module (222).

4. The battery pack (100) according to claim 3, wherein the third tray beam (123) is offset from the center of the tray (1) in the first direction.

5. The battery pack according to claim 3 or 4, wherein the first-layer battery module (21) comprises:
a third battery module (211), wherein the third battery module (211) is disposed between the first tray beam (121) and the third tray beam (123); and
a fourth battery module (212), wherein the fourth battery module (212) is disposed between the third tray beam (123) and the second tray beam (122).

6. The battery pack (100) according to any one of claims 3 to 5, further comprising:
a heat exchange plate (3), wherein the heat exchange plate (3) is disposed between the first-layer battery module (21) and the second-layer battery module (22), and the heat exchange plate (3) is connected to the first tray beam (121), the second tray beam (122), and the third tray beam (123).

7. The battery pack (100) according to any one of claims 3 to 6, wherein the tray body (11) is provided with a first side beam (111) and a second side beam (112), the first side beam (111) and the second side beam (112) both extend in the first direction, the first side beam (111) and the second side beam (112) are respectively located on two sides of the first tray beam (121), the second tray beam (122), and the third tray beam (123) in a second direction, and the second direction is perpendicular to the first direction; and
the battery pack (100) further comprises:
a first end plate (4), wherein the first end plate (4) is connected to the first side beam (111); and
a second end plate (5), wherein the second end plate (5) is connected to the second side beam (112), and the second-layer battery module (22) is connected to the first end plate (4) and the second end plate (5).

8. The battery pack (100) according to claim 7, wherein the first side beam (111) is provided with at least one first connecting protrusion (1111), and the first end plate (4) is connected to the first connecting protrusion (1111); and/or
the second side beam (112) is provided with at least one second connecting protrusion (1121), and the second end plate (5) is connected to the second connecting protrusion (1121).

9. The battery pack (100) according to claim 8, wherein there are a plurality of first connecting protrusions (1111), the plurality of first connecting protrusions (1111) are spaced apart in the first direction, and the first end plate (4) is connected to the plurality of first connecting protrusions (1111); and/or
there are a plurality of second connecting protrusions (1121), the plurality of second connecting protrusions (1121) are spaced apart in the first direction, and the second end plate (5) is connected to the plurality of second connecting protrusions (1121).

10. A vehicle (1000), comprising the battery pack (100) according to any one of claims 1 to 9.
